# EUROPEAN PATENT APPLICATION

(11) **EP 4 254 105 A1**
(43) Date of publication of application: **04.10.2023**
(21) Application number: 23165229.8
(22) Date of filing: 29.03.2023
(51) Int. Cl.: G05B 19/418, B25J 9/16

(54) **WORK MANAGEMENT SYSTEM, METHOD, AND PROGRAM**

(30) Priority: 01.04.2022 JP 2022061476
(71) Applicant: OMRON Corporation, Kyoto 600-8530 (JP)
(72) Inventor: KOBAYASHI, Shinji, Kyoto-shi, Kyoto (JP); UENO, Shinji, Kyoto-shi, Kyoto (JP)
(74) Representative: Mewburn Ellis LLP

(57) **Abstract**

In a workplace where a work is performed based on a previously-optimized work schedule, a decrease in productivity can be prevented while interference between a plurality of work subjects is avoided. A schedule management unit (10) is configured to calculate a first margin time from an end time of a first work to a start time of a second work, the first work being allocated to a time period including a current time in the work schedule of a first work subject (30X), the second work being scheduled next to the first work in the work schedule. When an interference condition is satisfied and the first margin time is longer than a specific reference time, the schedule management unit (10) instructs the first work subject (30X) to take action of avoiding the second work subject (30Y).

## Description

### CROSS REFERENCE TO RELATED APPLICATIONS

This nonprovisional application is based on Japanese Patent Application No. 2022-061476 filed on April 1, 2022, with the Japan Patent Office, the entire contents of which are hereby incorporated by reference.

### BACKGROUND OF THE INVENTION

### Field of the Invention

The present disclosure relates to a work management system, a method, and a program that manage a plurality of work subjects who perform work at a workplace.

### Description of the Background Art

Conventionally, a configuration in which a plurality of work subjects who perform work in a workplace such as a factory is managed is known. For example, Japanese Patent Laying-Open No. 2020-97091 discloses a robot interference determination device that predicts a position and a speed vector of a worker in the future and determines a possibility of interference between the worker and a robot from the position and the speed vector of the worker in the future and the position and the speed vector of the robot in the future. Because the robot interference determination device determines the possibility of the interference in the future at the present time, operation of the robot required for avoiding interference can be smoothed and minimized as compared with a case where the possibility of the interference at the present time is determined at the present time. According to the robot interference determination device, a decrease in production efficiency due to sudden deceleration, sudden stop, or the like of the robot can be prevented while the interference between the robot and the worker is avoided.

### SUMMARY OF THE INVENTION

In the configuration disclosed in Japanese Patent Laying-Open No. 2020-97091, the robot performs an avoidance behavior in order to avoid the interference between the robot and the worker. In the case where the robot and the worker are working together based on the previously-optimized work schedule in the production line, depending on timing at which the avoidance behavior is required, it is assumed that the robot does not have enough time to perform the avoidance behavior in view of the work schedule of the robot. When the robot performs the avoidance behavior until such the case, it becomes difficult for the robot to comply with the work schedule, and a delay may be generated in the entire production line. As a result, productivity of the production line may be reduced.

The present disclosure has been made to solve the above problems, and an object of the present disclosure is to prevent a decrease in productivity while avoiding the interference between a plurality of work subjects in the workplace where the work is performed based on the previously-optimized work schedule.

A work management system according to one aspect of the present disclosure includes a movement monitoring unit and a schedule management unit. The movement monitoring unit is configured to acquire movement information related to movement of each of a plurality of work subjects that performs work in a workplace. The schedule management unit is configured to manage a work schedule of each of the plurality of work subjects based on the movement information. The plurality of work subjects include a first work subject and a second work subject that move in the workplace. The schedule management unit is configured to calculate a first margin time from an end time of a first work to a start time of a second work, wherein the first work is allocated to a time period including a current time in a first work schedule of the first work subject, and the second work is scheduled next to the first work in the first work schedule. The schedule management unit is configured to determine whether movement information about the first work subject and movement information about the second work subject satisfy an interference condition. The schedule management unit is configured to instruct the first work subject to take action of avoiding the second work subject, when the interference condition is satisfied and the first margin time is longer than a specific reference time. The schedule management unit is configured to instruct the second work subject to take action of avoiding the first work subject, when the interference condition is satisfied and the first margin time is shorter than the specific reference time.

According to this disclosure, in the first work subject and the second work subject that perform the work at a current time, the avoidance action is instructed to the work subject having a relatively long margin time between an end scheduled time of the work and a start scheduled time of the work next to the work. The work schedule of the work subject performing the avoidance behavior is unlikely to be delayed, so that a chain delay of the work schedule of another work subject due to the avoidance behavior can be prevented. As a result, in the workplace where the work is performed based on a previously-optimized work schedule, a decrease in productivity can be prevented while the interference between the plurality of work subjects is avoided.

In the above disclosure, the schedule management unit is configured to calculate a second margin time from a start time of a third work to a start time of a fourth work, wherein the third work is allocated to a time period including the current time in a second work schedule of the second work subject, and the fourth work is scheduled next to the third work in the second work schedule. The specific reference time may be the second margin time.

According to this disclosure, the avoidance behavior to the work subject having a long margin time in the first work subject and the second work subject that perform the work at the current time can be instructed.

In the above disclosure, the first work subject may be a first moving mechanism, and the second work subject may be a second moving mechanism. The movement information may include a first path and a second path, wherein the first path is a path from a current position of the first moving mechanism to a destination of the first work, and the second path is a path from a current position of the second moving mechanism to a destination of the third work in the second work schedule. The interference condition may include a condition that the first path crosses the second path.

According to this disclosure, the avoidance behavior to the moving mechanism having a long margin time in the first moving mechanism and the second moving mechanism that perform the work at the current time can be instructed.

In the above disclosure, each of the first moving mechanism and the second moving mechanism may include a light emitter. The schedule management unit is configured to light the light emitter in a first color when the first margin time is shorter than a first reference time, light the light emitter in a second color different from the first color when the first margin time is longer than the first reference time and shorter than a second reference time, and light the light emitter in a third color different from each of the first color and the second color when the first margin time is longer than the second reference time.

According to this disclosure, the light emitter is lit in different colors according to the margin time of the moving mechanism, so that the worker can know the stage (degree) of the margin time of the moving mechanism.

In the above disclosure, at least one of the first work subject and the second work subject may be a worker. The work management system may further include a terminal device carried by the worker. The movement information may include position information about the terminal device. The interference condition may include a condition that the distance between the first work subject and the second work subject is shorter than the reference distance.

According to this disclosure, even when at least one of the first work subject and the second work subject includes the worker, the avoidance behavior to the work subject having a long margin time in the first work subject and the second work subject that perform the work at the current time can be instructed.

A method according to another aspect of the present disclosure manages a work schedule of a work subject based on movement information related to movement of each of a plurality of work subjects performing a work in a workplace. The plurality of work subjects include a first work subject and a second work subject that move in the workplace. The method includes: calculating a first margin time from an end time of a first work to a start time of a second work, wherein the first work is allocated to a time period including a current time in a first work schedule of the first work subject, and the second work is scheduled next to the first work in the first work schedule; determining whether movement information about the first work subject and movement information about the second work subject satisfy an interference condition; instructing the first work subject to take action of avoiding the second work subject when the interference condition is satisfied and the first margin time is longer than a specific reference time; and instructing the second work subject to take action of avoiding the first work subject when the interference condition is satisfied and the first margin time is shorter than the specific reference time.

According to this disclosure, in the first work subject and the second work subject that perform the work at a current time, the avoidance action is instructed to the work subject having a relatively long margin time between an end scheduled time of the work and a start scheduled time of the work next to the work. The work schedule of the work subject performing the avoidance behavior is unlikely to be delayed, so that a chain delay of the work schedule of another work subject due to the avoidance behavior can be prevented. As a result, in the workplace where the work is performed based on a previously-optimized work schedule, a decrease in productivity can be prevented while the interference between the plurality of work subjects is avoided.

A program according to still another aspect of the present disclosure manages a work schedule of a work subject based on movement information related to movement of each of a plurality of work subjects performing a work in a workplace. The plurality of work subjects include a first work subject and a second work subject that move in the workplace. The program, when executed by a processor, causes the processor to: calculate a first margin time from an end time of a first work to a start time of a second work, wherein the first work is allocated to a time period including a current time in a first work schedule of the first work subject, and the second work is scheduled next to the first work in the first work schedule; determine whether movement information about the first work subject and movement information about the second work subject satisfy an interference condition; instruct the first work subject to take action of avoiding the second work subject when the interference condition is satisfied and the first margin time is longer than a specific reference time; and instruct the second work subject to take action of avoiding the first work subject when the interference condition is satisfied and the first margin time is shorter than the specific reference time.

According to this disclosure, in the first work subject and the second work subject that perform the work at a current time, the avoidance action is instructed to the work subject having a relatively long margin time between an end scheduled time of the work and a start scheduled time of the work next to the work. The work schedule of the work subject performing the avoidance behavior is unlikely to be delayed, so that a chain delay of the work schedule of another work subject due to the avoidance behavior can be prevented. As a result, in the workplace where the work is performed based on a previously-optimized work schedule, a decrease in productivity can be prevented while the interference between the plurality of work subjects is avoided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram illustrating a functional configuration of a work management system according to an embodiment.
Fig. 2 is a gantry chart illustrating an example of a work schedule of a work subject in Fig. 1.
Fig. 3 is a view illustrating directions in which work subjects move in a workplace.
Fig. 4 is a schematic diagram illustrating a network configuration example of a production system including an example of the work management system in Fig. 1.
Fig. 5 is a block diagram illustrating a hardware configuration example of a schedule management device in Fig. 4.
Fig. 6 is a block diagram illustrating a hardware configuration example of an AMR management device in Fig. 4.
Fig. 7 is a block diagram illustrating a hardware configuration example of AMR in Fig. 4.
Fig. 8 is a block diagram illustrating a hardware configuration example of a position detection device in Fig. 4.
Fig. 9 is a block diagram illustrating a hardware configuration of a terminal device in Fig. 4.
Fig. 10 is a view illustrating an example of an environment map in Figs. 6 and 7.
Fig. 11 is a view in which a work subject is superimposed and displayed on an entry prohibited area that is control information and a position of each of a plurality of AMRs and a plurality of workers detected at a current time in the environment map of Fig. 10.
Fig. 12 is a gantry chart illustrating a work schedule scheduled in an assembly cell in Fig. 11.
Fig. 13 is a work flowchart illustrating a specific example of each work in Fig. 12.
Fig. 14 is a view illustrating a gantry chart representing the work schedule of each of the AMR and the worker related to the work performed in the assembly cell in Fig. 12.
Fig. 15 is a view illustrating the gantry chart representing the work schedule of each of the AMR and the worker related to the work performed in the assembly cell in Fig. 12.
Fig. 16 is a view illustrating the gantry chart representing the work schedule of each of the AMR and the worker related to the work performed in the assembly cell in Fig. 12.
Fig. 17 is a flowchart illustrating an example of a flow of schedule management processing performed by a main routine of the schedule management device in Fig. 4.
Fig. 18 is a flowchart illustrating an example of a flow of resource allocation optimization processing in Fig. 17.
Fig. 19 is a flowchart illustrating an example of a flow of lighting processing of AMR performed in interference determination processing of Fig. 18.
Fig. 20 is a flowchart illustrating an example of a flow of interference determination processing between the AMR and the worker performed in the interference determination processing of Fig. 18.
Fig. 21 is a flowchart illustrating an example of a flow of the interference determination processing between two AMRs performed in the interference determination process of Fig. 18.
Fig. 22 is a flowchart illustrating an example of a flow of the interference determination processing between two workers performed in the interference determination processing of Fig. 18.
Fig. 23 is a flowchart illustrating another example of the flow of the interference determination processing between the AMR and the worker performed in the interference determination process of Fig. 18.

### DESCRIPTION OF THE PREFERRED EMBODIMENT

Hereinafter, an embodiment of the present invention will be described in detail with reference to the drawings. In the drawings, the same or corresponding part is denoted by the same reference numeral, and the description thereof will not generally be repeated.

### <Application example>

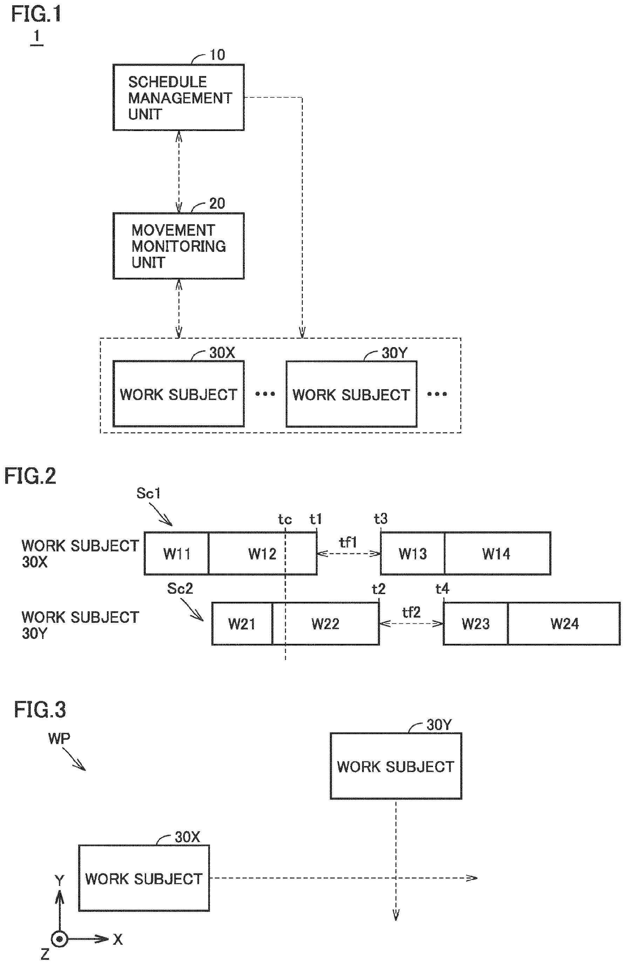

Fig. 1 is a block diagram illustrating a functional configuration of a work management system 1 of the embodiment. As illustrated in Fig. 1, work management system 1 includes a schedule management unit 10 and a movement monitoring unit 20. Movement monitoring unit 20 acquires movement information related to movement of each of a plurality of work subjects 30 that performs work in a workplace. Schedule management unit 10 manages a work schedule of the work subject based on the movement information acquired by movement monitoring unit 20. The plurality of work subjects 30 include a work subject 30X (first work subject) and a work subject 30Y (second work subject). For example, the plurality of work subjects 30 include a moving mechanism or a worker. The plurality of work subjects 30 may not include the moving mechanism or may not include the worker.

Fig. 2 is a gantry chart illustrating an example of work schedules Sc1, Sc2 of work subjects 30X, 30Y in Fig. 1. In Fig. 2, time passes in order of times tc, t1, t2, t3, t4. As illustrated in Fig. 2, in work schedule Sc1 of work subject 30X, works W11, W12, W13, W14 are scheduled in this order. In work schedule Sc1, after works W11, W12 are continuously performed, works W13, W14 are continuously performed at a time interval tf1. In work schedule Sc2 of work subject 30Y, works W21, W22, W23, W24 are scheduled in this order. In work schedule Sc2, after works W21, W22 are continuously performed, works W23, W24 are continuously performed at a time interval tf2.

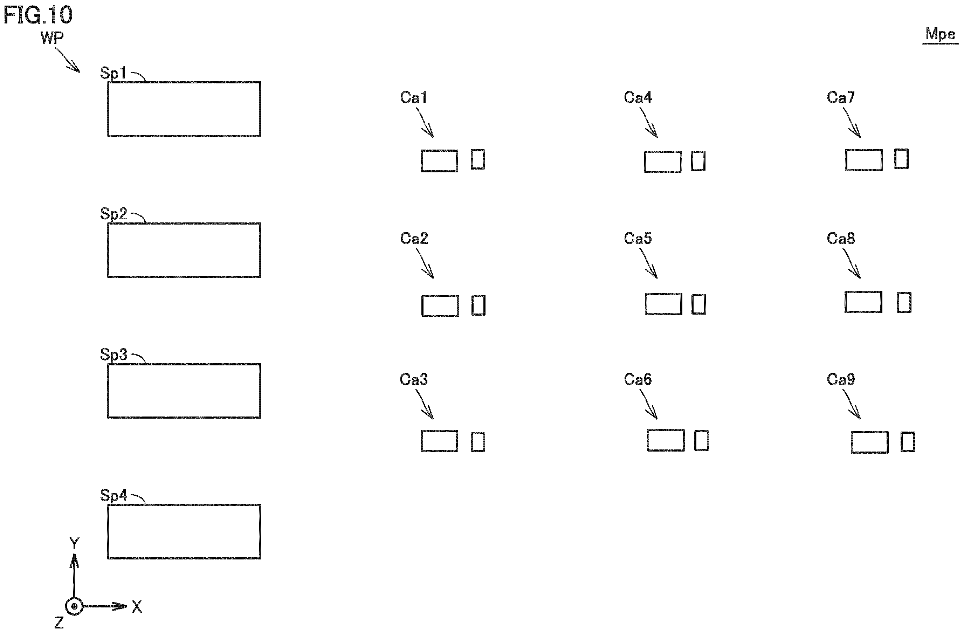

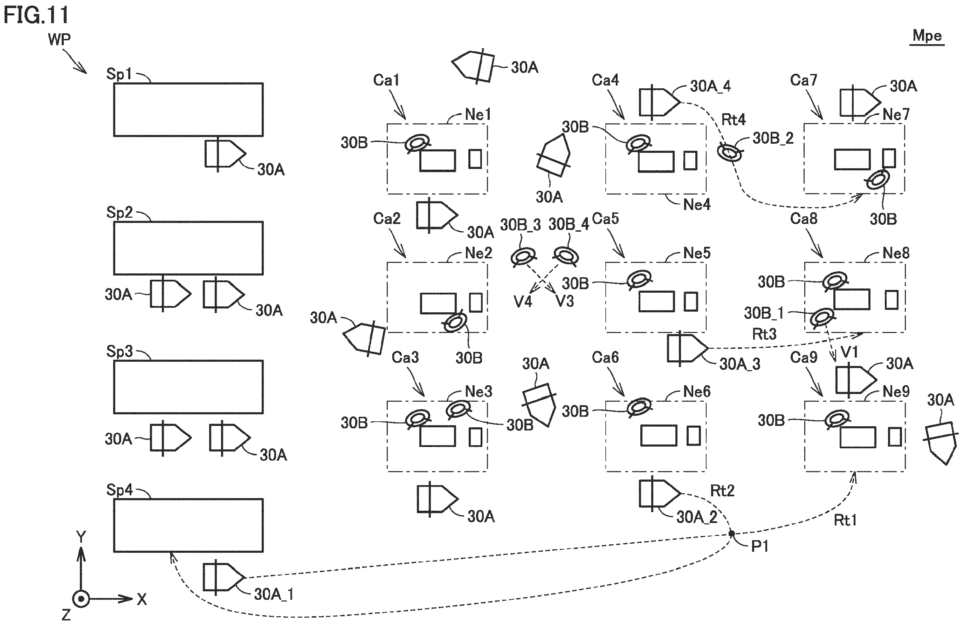

Fig. 3 is a view illustrating directions in which work subject 30X and work subject 30Y move in a workplace WP. In Fig. 3, an X-axis, a Y-axis, and a Z-axis are orthogonal to each other. The same applies to Figs. 10 and 11 described later.

With reference also to Figs. 1 to 3, movement monitoring unit 20 acquires the movement information related to the directions in which work subjects 30X, 30Y moves from current positions of work subjects 30X, 30Y. For example, the movement information includes a path on which work subject 30 moves and a speed vector of work subject 30.

Schedule management unit 10 calculates a margin time tf1 (first margin time) from an end time t1 of work W12 to a start time t3 of work W13 (second work) scheduled next to work W12 in work schedule Sc1 (first work schedule). Schedule management unit 10 calculates a margin time tf2 (second margin time) from a start time t2 of work W22 (third work) allocated in a time zone including a current time tc in work schedule Sc2 (second work schedule) of work subject 30Y to a start time t4 of work W23 (fourth work) scheduled next to work W22 in work schedule Sc2.

Schedule management unit 10 determines whether the movement information about work subject 30X and the movement information about work subject 30Y satisfy an interference condition. The interference condition is previously determined according to a combination of work subjects 30X, 30Y as a condition satisfied when work subjects 30X, 30Y interfere with each other. For example, the combination of work subjects 30X, 30Y includes a combination of two moving mechanisms, a combination of a moving mechanism and the worker, and a combination of two workers. When the interference condition is satisfied and when margin time tf1 is longer than margin time tf2, schedule management unit 10 instructs work subject 30X to take action (avoidance action) of avoiding work subject 30Y. When the interference condition is satisfied and when margin time tf2 is longer than margin time tf1, schedule management unit 10 instructs work subject 30Y to take action of avoiding work subject 30X. Schedule management unit 10 may output the avoidance action to the work subject 30X or 30Y through movement monitoring unit 20.

In work management system 1, the avoidance action is instructed to work subject 30 having a relatively long margin time between an end scheduled time of the work and a start scheduled time of the work next to the work among work subjects 30 performing the work at current time tc. The work schedule of work subject 30 performing the avoidance behavior is unlikely to be delayed, so that a chain delay of the work schedule of another work subject due to the avoidance behavior can be prevented. According to work management system 1, in the workplace where the work is performed based on a previously-optimized work schedule, a decrease in productivity can be prevented while the interference between the plurality of work subjects 30 is avoided.

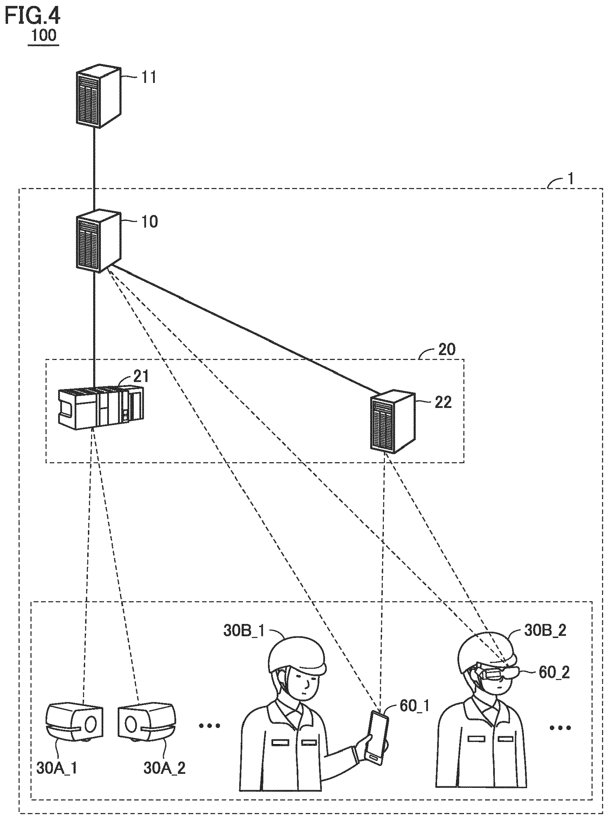

Fig. 4 is a schematic diagram illustrating a network configuration example of a production system 100 including an example of work management system 1 in Fig. 1. Production system 100 manages production of a product at a production site (workplace) including a plurality of production lines. Each of the plurality of production lines includes a plurality of processes.

As illustrated in Fig. 4, production system 100 includes a host system 11 and work management system 1. Schedule management unit 10 in Fig. 1 is illustrated as a schedule management device 10 in Fig. 4. Movement monitoring unit 20 includes an autonomous mobile robot (AMR) management device 21 and a position detection device 22. Movement monitoring unit 20 may be formed as one computer (information processing device). The plurality of work subjects 30 include an AMR 30A_1 (first moving mechanism), an AMR 30A_2 (second moving mechanism), a worker 30B_1, and a worker 30B_2. Worker 30B_1 carries a smartphone 60_1 (terminal device). Worker 30B_2 wears a smart glasses 60_2 (terminal device).

Host system 11 instructs the work management system 1 on a production order (for example, a production item, a number of products, and delivery date information). For example, host system 11 includes enterprise resources planning (ERP) or a manufacturing execution system (MES).

Schedule management device 10 has a scheduling function. The scheduling function includes a function of creating a work schedule of each of the plurality of work subjects in order to execute the production order received from host system 11. Specifically, schedule management device 10 creates the work schedule by allocating a work time required for execution of a task (work) in each process of the production line and a resource (for example, the worker, a component, a process fixture, or a facility) required for each process to each of the plurality of work subjects in consideration of an available amount of material, a current resource status, or the like. For example, the work schedule is expressed in a gantry chart format. Various optimization techniques using minimization of production lead time, minimization of resource utilization, and the like as indices are used in order to calculate allocation of the work time and the resource. For example, a genetic algorithm or tab search is used as the optimization technique. Reschedule of the work schedule is performed by recalculation of the allocation of the work time and the resource periodically (for example, every minute) or when a predetermined trigger event (for example, the stop of the device, the recession of the worker, and the separation, the delay, and the like greater than or equal to the predetermined time between the scheduled time and the actual time) is generated. The work start scheduled time and the end scheduled time of each task are planned in the work schedule.

Schedule management device 10 further has a margin time calculation function and a production instruction management function. The margin time calculation function is a function of calculating the margin time in the work schedule of the work subject from the work schedule and the state of each of the plurality of work subjects 30. The production instruction management function is a function of allocating the work to each of the plurality of work subjects 30.

Schedule management device 10 grasps a progress status of the work schedule of each of the plurality of work subjects 30 from a video from each of the plurality of work subjects 30 and a video of a camera installed in the production line. The video from worker 30B is a video captured by a terminal device 60 carried by worker 30B. Schedule management device 10 may grasp the progress status of the work of worker 30B according to input of worker 30B to terminal device 60.

AMR management device 21 is wirelessly connected to a plurality of AMRs 30A including AMRs 30A_1 and 30A_2, and controls the plurality of AMRs 30A. For example, AMR management device 21 includes a programmable logic controller (PLC). AMR management device 21 outputs information related to the path and the position of each of the plurality of AMRs 30A to schedule management device 10.

Each of AMR management device 21 and the plurality of AMRs 30A has a two-dimensional environment map of the production site. The environment map is generated from information obtained by sensing performed by AMR 30A while AMR 30A moves around the production site. For example, the environment map is constructed using a simultaneous localization and mapping (SLAM) algorithm. Each of the plurality of AMRs 30A or AMR management device 21 designs a target path from a self-position of AMR 30A identified on the environment map to a set destination. For example, the self-position of AMR 30A is estimated using a particle filter or an algorithm such as Monte Carlo position estimation. In designing the target path, for example, a path design algorithm such as A* or a rapidly exploring random tree (RRT) is used.

Position detection device 22 is wirelessly connected to the terminal device carried by each of the plurality of workers 30B including workers 30B_1, 30B_2, and detects the position of the terminal device as the position of worker 30B carrying the terminal device. Position detection device 22 outputs the position to schedule management device 10.

Schedule management device 10, AMR management device 21, and position detection device 22 are not necessarily installed in the workplace (for example, a factory) where the plurality of work subjects 30 perform the work. For example, schedule management device 10, AMR management device 21, and position detection device 22 may be formed as a cloud server at a remote location away from the workplace. For example, each of schedule management device 10, AMR management device 21, and position detection device 22 may communicate with another device (for example, AMR 30A or terminal device 60) through an access point, a base station, or an antenna that are connected to the device in a wired manner.

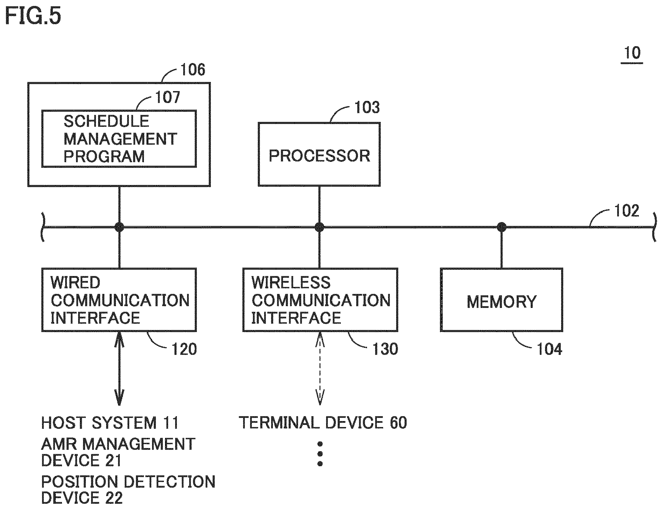

Fig. 5 is a block diagram illustrating a hardware configuration example of schedule management device 10 in Fig. 4. As illustrated in Fig. 5, schedule management device 10 includes a processor 103, a memory 104, a storage 106, a wired communication interface 120, and a wireless communication interface 130 as main components. These components included in schedule management device 10 are communicably connected to each other through an internal bus 102.

Processor 103 implements various pieces of processing by reading and executing various programs stored in storage 106. Memory 104 includes a volatile storage device such as a dynamic random access memory (DRAM) or a static random access memory (SRAM). Storage 106 stores a schedule management program 107 integrally managing the work schedules of the plurality of work subjects 30.

Wired communication interface 120 controls data exchange through a wired network. Specifically, wired communication interface 120 controls the data exchange with each of host system 11, AMR management device 21, and position detection device 22.

Wireless communication interface 130 controls the data exchange through a wireless network. Specifically, wireless communication interface 130 controls the data exchange with each of the plurality of terminal devices 60.

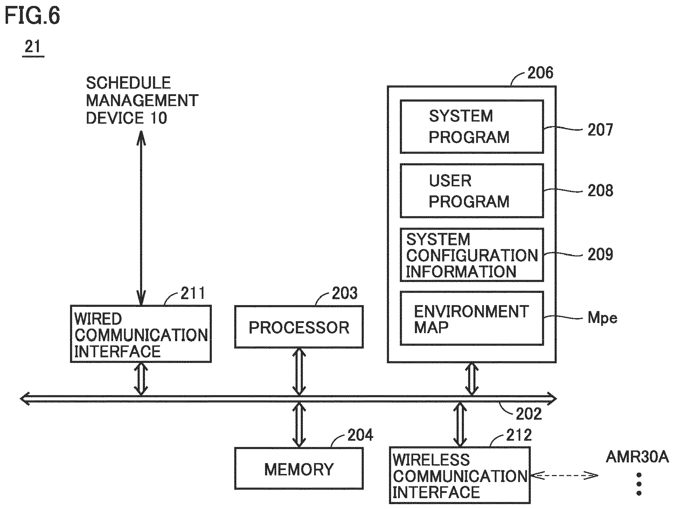

Fig. 6 is a block diagram illustrating a hardware configuration example of AMR management device 21 in Fig. 4. AMR management device 21 may typically be configured based on the PLC. As illustrated in Fig. 6, AMR management device 21 includes a processor 203, a memory 204, a storage 206, a wired communication interface 211, and a wireless communication interface 212 as main components.
These components included in AMR management device 21 are communicably connected to each other through an internal bus 202.

Processor 203 implements various pieces of processing by reading and executing a system program 207 and a user program 208 that are stored in storage 206. Memory 204 includes a volatile storage device such as the DRAM or the SRAM.

In addition to system program 207 controlling each portion of AMR management device 21, storage 206 stores user program 208 designed according to a control target or the like.

Storage 206 stores information (system configuration information 209) indicating the configuration (system configuration) of production system 100 to which AMR management device 21 belongs. For example, system configuration information 209 is information related to schedule management device 10 connected to AMR management device 21, a control period of AMR management device 21, a capacity upper limit value of a storage area for user program 208 in storage 206, model and version information of AMR management device 21, and information indicating performance and model of AMR 30A connected to AMR management device 21. In addition, storage 206 stores a two-dimensional environment map Mpe of the production site.

Wired communication interface 211 controls the data exchange through the wired network. Specifically, wired communication interface 211 controls the data exchange with schedule management device 10.

Wireless communication interface 212 controls the data exchange through the wireless network. Specifically, wireless communication interface 212 controls the data exchange with each of the plurality of AMRs 30A.

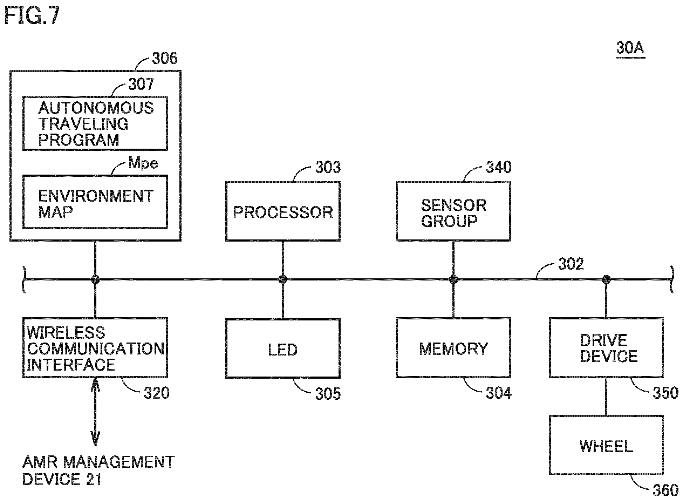

Fig. 7 is a block diagram illustrating a hardware configuration example of AMR 30A in Fig. 4. As illustrated in Fig. 7, AMR 30A includes a processor 303, a memory 304, a light emitting diode (LED) 305 (light emitter), a storage 306, a wireless communication interface 320, a sensor group 340, a drive device 350, and wheels 360 as main components. These components included in AMR 30A are communicably connected to each other through an internal bus 302.

Processor 303 implements various pieces of processing by reading and executing various programs stored in storage 306. Memory 304 includes a volatile storage device such as the dynamic random access memory (DRAM) or the static random access memory (SRAM). Storage 306 stores an autonomous traveling program 307 performing autonomous traveling and route design, and environment map Mpe.

Wireless communication interface 320 controls the data exchange through the wireless network. Specifically, wireless communication interface 320 controls the data exchange with AMR management device 21.

Sensor group 340 includes various sensors such as a sensor (for example, a laser scanner or a global positioning system (GPS) sensor) that identifies a current position of AMR 30A, a laser sensor (distance sensor) or a camera that detects an obstacle or worker 30B around AMR 30A in order to create the environment map, or a contact sensor that detects contact with an object or worker 30B.

Drive device 350 is a device that drives wheels 360. Drive device 350 includes an actuator such as a motor.

LED 305 is lit in a color corresponding to the margin time of AMR 30A. For example, LED 305 is lit in red when the margin time of AMR 30A is shorter than reference time Tr1 (first reference time), lit in yellow when the margin time is greater than or equal to reference time Tr1 and shorter than reference time Tr2 (second reference time), and lit in green when the margin time is greater than or equal to reference time Tr2. LED 305 is lit in a different color according to the margin time of AMR 30A, so that worker 30B can know the stage (degree) of the margin time of AMR 30A. Reference times Tr1 to Tr3 are longer in this order, and can be appropriately determined by an actual machine experiment or simulation.

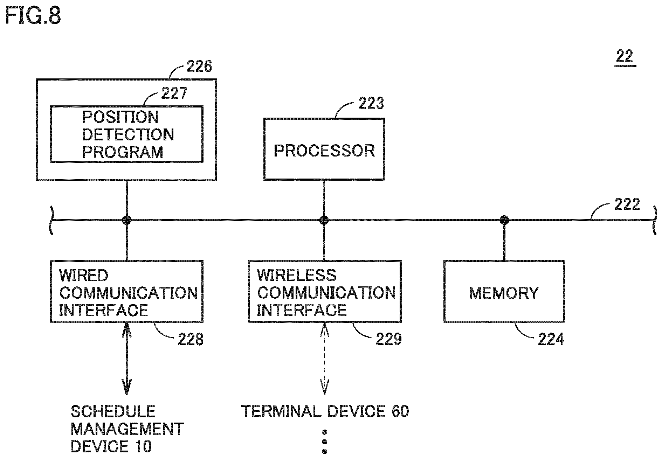

Fig. 8 is a block diagram illustrating a hardware configuration example of position detection device 22 in Fig. 4. As illustrated in Fig. 8, position detection device 22 includes a processor 223, a memory 224, a storage 226, a wired communication interface 228, and a wireless communication interface 229 as main components. These components included in position detection device 22 are communicably connected to each other through an internal bus 222.

Processor 223 implements various pieces of processing by reading and executing various programs stored in storage 226. Memory 224 includes a volatile storage device such as the DRAM or the SRAM. Storage 226 stores a position detection program 227 detecting the position of each of the plurality of terminal devices 60.

Wired communication interface 228 controls the data exchange through the wired network. Specifically, wired communication interface 228 controls the data exchange with schedule management device 10.

Wireless communication interface 229 controls the data exchange through the wireless network. Specifically, wireless communication interface 229 controls the data exchange with each of the plurality of terminal devices 60.

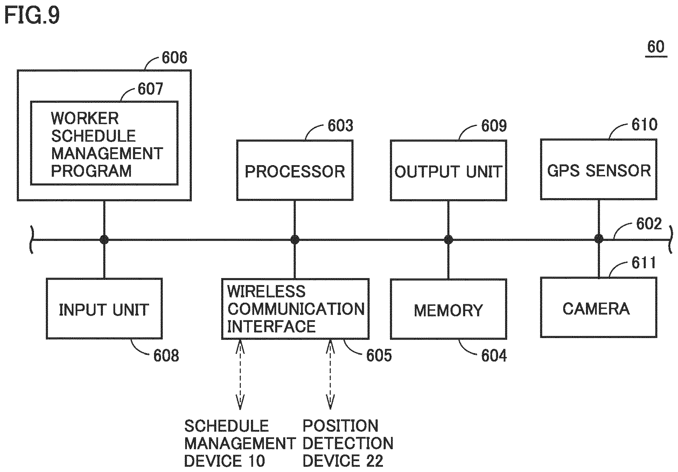

Fig. 9 is a block diagram illustrating a hardware configuration of terminal device 60 in Fig. 4. As illustrated in Fig. 9, terminal device 60 includes a processor 603, a memory 604, a wireless communication interface 605, a storage 606, an input unit 608, an output unit 609, a GPS sensor 610, and a camera 611 as main components. These components included in terminal device 60 are communicably connected to each other through an internal bus 602.

Processor 603 implements various pieces of processing by reading and executing various programs stored in storage 606. Memory 604 includes a volatile storage device such as the DRAM or the SRAM. Storage 606 stores a worker schedule management program 607 managing the work schedule of worker 30B carrying terminal device 60.

Wireless communication interface 605 controls the data exchange through the wireless network. Specifically, wireless communication interface 605 controls the data exchange with each of schedule management device 10 and position detection device 22.

Input unit 608 receives the input to the program from the user (worker). In input unit 608, for example, the progress status of the work schedule is input to the graphical user interface (GUI) of the worker schedule management program. For example, input unit 608 includes a touch panel, a button, or a microphone.

Output unit 609 outputs the execution result of the program to the user. For example, output unit 609 outputs the information related to the work schedule and the avoidance behavior from schedule management device 10. For example, output unit 609 includes a display (display unit), a speaker, or a lamp.

GPS sensor 610 acquires information specifying the current position of terminal device 60. Camera 611 acquires the video that enters the field of view from terminal device 60. The position of worker 30B may be detected by the distance sensor or the camera of AMR 30A.

Fig. 10 is a view illustrating an example of environment map Mpe in Figs. 6 and 7. In environment map Mpe, the position of the obstacle in a production site WP is displayed in black. Each of the plurality of work subjects needs to move through the production site while avoiding the obstacle.

As illustrated in Fig. 10, in the production site WP, component shelves Sp1, Sp2, Sp3, Sp4 in which components included in the product are stored are juxtaposed in a Y-axis direction. In production site WP, assembly cells Ca1, Ca2, Ca3, Ca4, Ca5, Ca6, Ca7, Ca8, Ca9 are formed so as to respectively correspond to nine cells of a matrix in which three rows are formed in the Y-axis direction and three columns are formed in an X-axis direction. Each of assembly cells Ca1 to Ca9 forms the production line. In each of assembly cells Ca1 to Ca9, various products are produced in cooperation of a crane, a cooperative robot, and the worker. At least one camera (not illustrated) is disposed in each of assembly cells Ca1 to Ca9. The at least one camera transmits the video of the work performed in the corresponding assembly cell to schedule management device 10. For example, the obstacle included in the assembly cell include a workbench, a crane, a cooperative robot, or a component placement site.

Fig. 11 is a view in which a work subject is superimposed and displayed on an entry prohibited area that is control information and the position of each of the plurality of AMRs 30A and the plurality of workers 30B detected at current time tc1 in environment map Mpe of Fig. 10. In Fig. 11, the position of each of the plurality of workers 30B corresponds to the position of terminal device 60 carried by the worker.

As illustrated in Fig. 11, entry prohibited areas Ne1, Ne2, Ne3, Ne4, Ne5, Ne6, Ne7, Ne8, Ne9 are set in assembly cells Ca1 to Ca9, respectively. Entry prohibited areas Ne1 to Ne9 are previously set by the user (for example, a manager of production site WP) in order to prohibit the entry of AMR 30 and secure the work areas in assembly cells Ca1 to Ca9.

AMR 30A_1 moves along a path Rt1 to the destination of assembly cell Ca9. AMR 30A_2 moves to the destination of component shelf Sp4 along a path Rt2. AMRs 30A_1, 30A_2 cross each other at a position P1. For example, when the interference condition that the time interval between an estimated time at which AMR 30A _1 arrives at position P1 and an estimated time at which AMR 30A_2 arrives at position P1 is within the reference time is satisfied, schedule management device 10 determines that AMRs 30A_1, 30A_2 interfere with each other, and instructs AMR 30A having the longer margin time in AMRs 30A_1, 30A_2 to take the action of avoiding the other AMR 30A.

An AMR 30A_3 moves along a path Rt3 to the destination of assembly cell Ca8. Worker 30B_1 has a velocity vector V1 toward path Rt3. That is, the traveling direction of worker 30B_1 crosses path Rt3. For example, when the interference condition that the distance between AMR 30A_3 and worker 30B_1 at current time tc1 is shorter than reference distance Dr1 and the traveling direction of worker 30B_1 crosses path Rt3 is satisfied, schedule management device 10 determines that AMR 30A_3 and worker 30B_1 interfere with each other, and instructs the work subject having the longer margin time in AMR 30A_3 and worker 30B_1 to take the action of avoiding the other work subject.

An AMR 30A_4 moves along a path Rt4 to the destination of assembly cell Ca7. Worker 30B_2 is stopped but is located on path Rt4. For example, when the interference condition that the distance between path Rt4 and worker 30B_2 at current time tc1 is shorter than a reference distance Dr11 (< Dr1) and worker 30B_2 is stopped is satisfied, schedule management device 10 determines that worker 30B_2 is located on path Rt4 and AMR 30A_4 and worker 30B_2 interfere with each other, and instructs the work subject having the longer margin time in AMR 30A_4 and worker 30B_2 to take the action of avoiding the other work subject.

Workers 30B_3, 30B_4 have speed vectors V3, V4, respectively. The traveling direction of worker 30B_3 crosses the traveling direction of worker 30B_4. For example, when the interference condition that the distance between worker 30B_3 and worker 30B_4 at current time tc1 is shorter than reference distance Dr2 and the traveling direction of worker 30B_3 intersects with the traveling direction of worker 30B_4 is satisfied, schedule management device 10 determines that workers 30B_3, 30B_4 interfere with each other, and instructs terminal device 60 of the work subject having the longer margin time in worker 30B_3 or 30B_4 to take the action of avoiding the other work subject The reference time and reference distances Dr1, Dr11, Dr2 can be appropriately determined by the actual machine experiment or simulation.

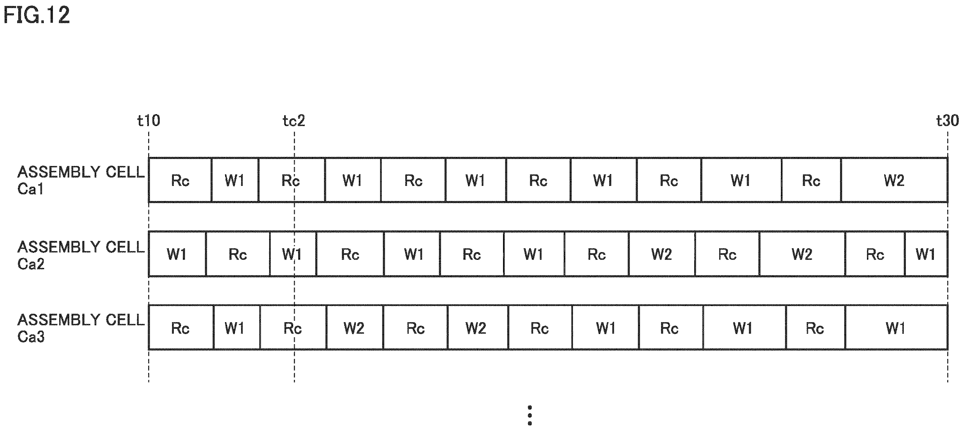

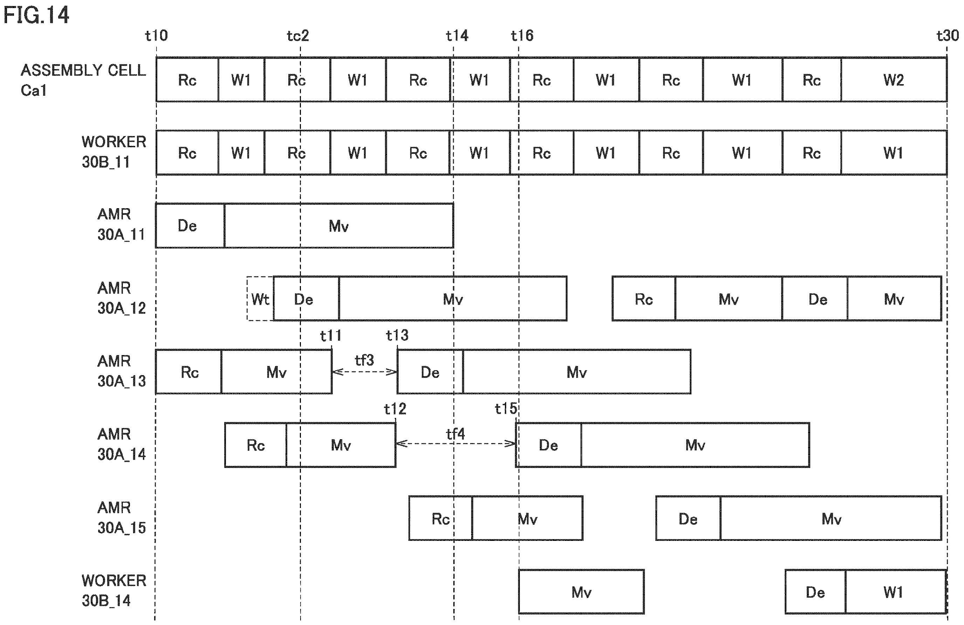

Fig. 12 is a gantry chart illustrating the work schedule scheduled in assembly cells Ca1 to Ca3 in Fig. 11. In Fig. 12, a work Rc is a work receiving the component or the like. Works W1, W2 are works of worker 30B, and represent one-person work and two-person work. A time tc2 represents the current time. The same applies to Figs. 14, 15, 16 described later. In Fig. 12, the time passes in the order of times 110, tc2, t30. As illustrated in Fig. 12, in each of assembly cells Ca1 to Ca3, the work schedule is scheduled to start at time t10 and end at time t30.

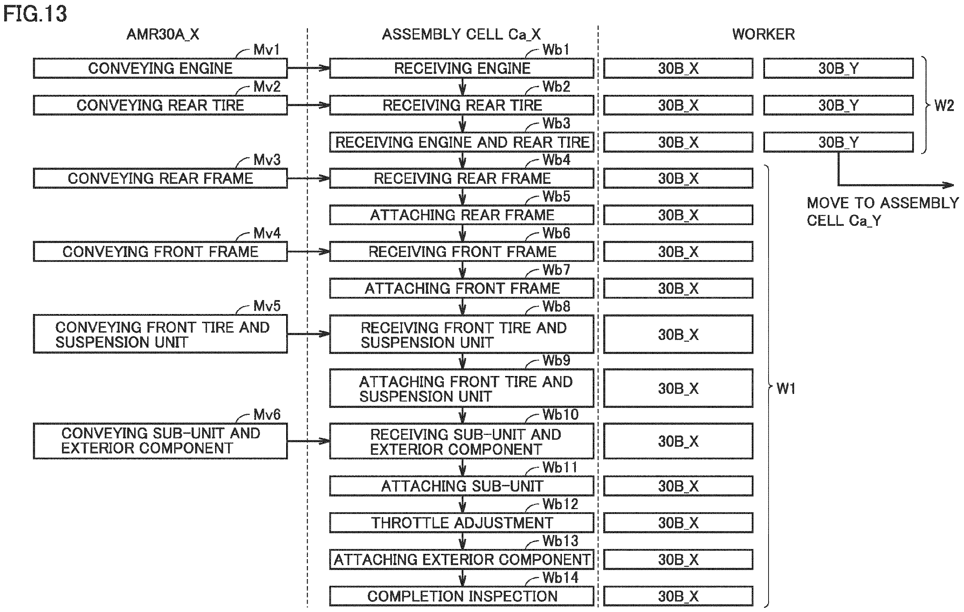

Fig. 13 is a work flowchart illustrating a specific example of each work in Fig. 12. Fig. 13 illustrates a work flow in the case where a motorcycle is produced in an assembly cell Ca_X. As illustrated in Fig. 13, in assembly cell Ca_X, works Wb1, Wb2, Wb3, Wb4, Wb5, Wb6, Wb7, Wb8, Wb9, Wb10, Wb11, Wb12, Wb13, Wb14 are performed in this order.

An AMR 30A_X performs a work Mv1 of engine conveyance to assembly cell Ca_X. Workers 30B_X, 30B_Y perform an engine receiving work Wb1 from AMR 30A_X in response to the arrival of AMR 30 A_X at assembly cell Ca_X.

After completion of work Mv1, AMR 30A_X performs a work Mv2 of rear tire conveyance to assembly cell Ca_X. Workers 30B_X, 30B_Y perform a work Wb2 receiving the rear tire from AMR 30A_X in response to the arrival of AMR 30A _X at assembly cell Ca_X.

After completion of work Wb2, workers 30B_X, 30B_Y perform a work Wb3 attaching the engine and the rear tires. After completion of work Wb3, worker 30B_Y moves from assembly cell Ca_X to an assembly cell Ca_Y. Each of works Wb1 to Wb3 is an example of two-person work W2 performed by two workers.

After completion of work Mv2, AMR 30A_X performs a work Mv3 of conveyance of the rear frame to assembly cell Ca_X. Worker 30B_X performs a work Wb4 receiving the rear frame in response to the arrival of AMR 30A_X at assembly cell Ca_X. After completion of work Wb4, worker 30B_X performs a rear frame attachment work Wb5.

After completion of work Mv3, AMR 30A_X performs a work Mv4 of conveyance of the front frame to assembly cell Ca_X. Worker 30B_X performs a work Wb6 receiving the front frame in response to the arrival of AMR 30A_X at assembly cell Ca_X. After completion of work Wb6, worker 30B_X performs a work Wb7 attaching the front frame.

After completion of work Mv4, AMR 30A_X performs a work Mv5 conveying the front tires and a suspension unit to assembly cell Ca_X. Worker 30B_X performs a work Wb8 receiving the front tires and the suspension unit in response to the arrival of AMR 30A_X at assembly cell Ca_X. After completion of work Wb8, worker 30B_X performs a work Wb9 attaching the front tires and the suspension unit.

After completion of work Mv5, AMR 30A_X performs a work Mv6 transporting a sub-unit and an exterior component to assembly cell Ca_X. Worker 30B_X performs a work Wb10 receiving the sub-unit and the exterior component in response to the arrival of AMR 30A_X at assembly cell Ca_X. After completion of work Wb10, worker 30B_X performs a work Wb11 of subunit attachment. After completion of work Wb11, worker 30B_X performs a work Wb12 of throttle adjustment. After completion of work Wb12, worker 30B_X performs a work Wb13 attaching the exterior component. After completion of work Wb13, worker 30B_X performs a work Wb14 of completion inspection. Each of works Wb4 to Wb14 is an example of one-person work W1 performed by one worker.

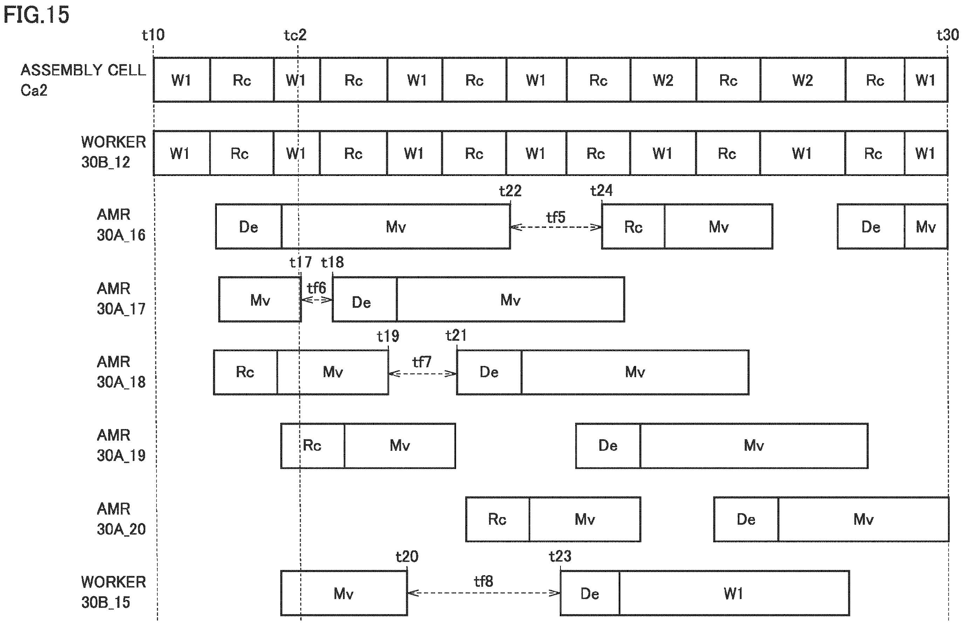

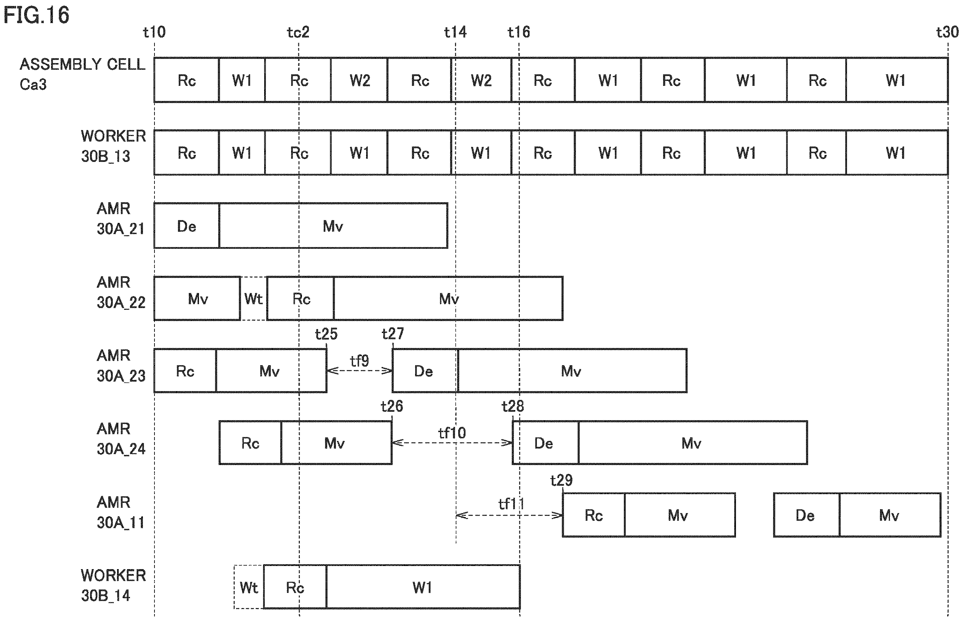

Fig. 14 is a view illustrating a gantry chart representing the work schedule of each of AMR 30A and worker 30B related to the work performed in assembly cell Ca1 in Fig. 12. In Fig. 14, a work Mv represents a movement work, a work De represents a delivery work, and Wt represents standby. The same applies to Figs. 15 and 16 described later. In Fig. 14, the time passes in the order of times t10, tc2, t11, 112, t13, t14, t15, t16, t30.

As illustrated in Fig. 14, workers 30B _11, 30B_14 and AMRs 30A_11, 30A_12, 30A_13, 30A_14, 30A_15 are involved in the work performed in assembly cell Ca1. Worker 30B_14 starts moving work Mv from assembly cell Ca3 to assembly cell Ca1 from time t16.

The work subject performing the work in assembly cell Ca1 at the current time tc2 is worker 30B_11, AMR 30A_11 to 30A_14. Because the end scheduled time of the work performed by each of worker 30B _11, AMR 30A_12 at current time tc2 is the start scheduled time of the next work of the work, the margin time of the work subject is zero.

AMR 30A_11 is scheduled to end moving work Mv to assembly cell Ca3 by time t14. With reference to Fig. 16, the margin time of AMR 30A_11 will be described later.

A margin time tf3 of AMR 30A_13 is a time interval from an end scheduled time t11 of work Mv allocated in a time period including current time tc2 in the work schedule of AMR 30A_13 to a start scheduled time t13 of work De scheduled next to work Mv in the work schedule.

A time margin tf4 of AMR 30A_14 is a time interval from an end scheduled time t12 of work Mv allocated in the time period including current time tc2 in the work schedule of AMR 30A_14 to a start scheduled time t15 of work De scheduled next to work Mv in the work schedule.

Fig. 15 is a view illustrating a gantry chart representing the work schedule of each of AMR 30A and worker 30B related to the work performed in assembly cell Ca2 in Fig. 12. The time passes in the order of times 110, tc2, t17, t18, t19, t20, t21, t22, t23, t24, t30.

As illustrated in Fig. 15, workers 30B_12, 30B_15 and AMRs 30A_16, 30A_17, 30A_18, 30A_19, 30A_20 are involved in the work performed in assembly cell Ca2.

The work subjects performing the work in assembly cell Ca2 at current time tc2 are workers 30B_12, 30B_15, AMR 30A_16 to 30A_19. Because the end scheduled time of the work performed by each of worker 30B_12, AMR 30A_19 at current time tc2 is the start scheduled time of the next work of the work, the margin time of the work subject is zero.

A time margin tf5 of AMR 30A_16 is a time interval from an end scheduled time t22 of work Mv allocated in the time period including current time tc2 in the work schedule of AMR 30A_16 to a start scheduled time t24 of work Rc scheduled next to work Mv in the work schedule.

A time margin tf6 of AMR 30A_17 is a time interval from an end scheduled time t17 of work Mv allocated in the time period including current time tc2 in the work schedule of AMR 30A_17 to a start scheduled time t18 of work De scheduled next to work Mv in the work schedule.

A time margin tf7 of AMR 30A_18 is a time interval from an end scheduled time t19 of work Mv allocated in the time period including current time tc2 in the work schedule of AMR 30A_18 to a start scheduled time t21 of work De scheduled next to work Mv in the work schedule.

A time margin tf8 of worker 30B_15 is a time interval from an end scheduled time t20 of work Mv allocated in the time period including current time tc2 in the work schedule of worker 30B_15 to a start scheduled time t23 of work De scheduled next to work Mv in the work schedule.

Fig. 16 is a view illustrating a gantry chart representing the work schedule of each of AMR 30A and worker 30B related to the work performed in assembly cell Ca3 in Fig. 12. The time passes in the order of times t10, tc2, t25, t26, t27, 114, t28, t16, t29, t30.

As illustrated in Fig. 16, workers 30B_13, 30B_14 and AMRs 30A_21, 30A_22, 30A_23, 30A_24, 30A_11 are involved in the work performed in assembly cell Ca3.

The work subject performing the work in assembly cell Ca3 at current time tc2 is workers 30B_13, 30B_14, AMR 30A_21 to 30A_24. Because the end scheduled time of the work performed by each of workers 30B_13, 30B_14, AMR 30A_22 at current time tc2 is the start scheduled time of the next work of the work, the margin time of the work subject is zero.

AMR 30A_21 has no other work scheduled after work Mv performed at current time tc2 is finished. Thus, the margin time of AMR 30A_21 is set to the maximum margin time.

A time margin tf9 of AMR 30A_23 is a time interval from an end scheduled time t25 of work Mv allocated in the time period including current time tc2 in the work schedule of AMR 30A_23 to a start scheduled time t27 of work De scheduled next to work Mv in the work schedule.

A time margin tf10 of AMR 30A_24 is a time interval from an end scheduled time t26 of work Mv allocated in the time period including current time tc2 in the work schedule of AMR 30A_24 to a start scheduled time t28 of work De scheduled next to work Mv in the work schedule.

Referring also to Fig. 14, a time margin tf11 of AMR 30A_11 is a time interval from an end scheduled time t14 of work Mv allocated in the time period including current time tc2 in the work schedule of AMR 30A_11 to a start scheduled time t29 of work Rc scheduled next to work Mv in the work schedule.

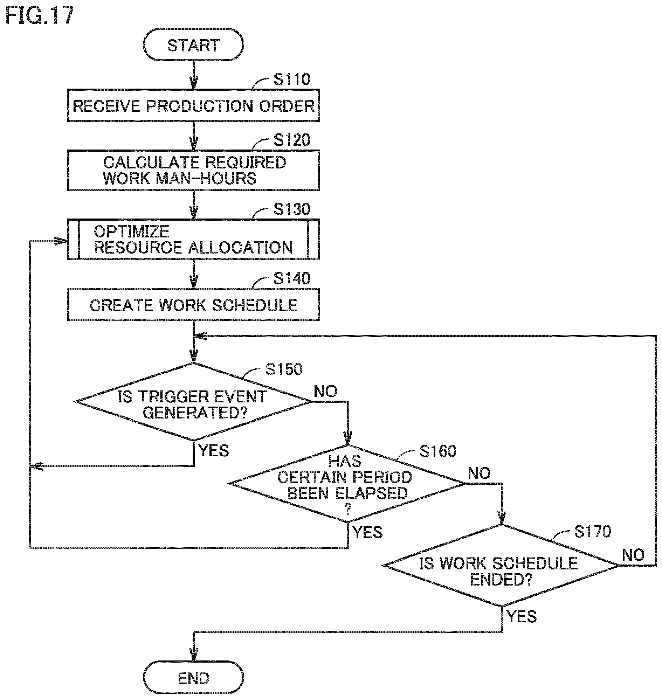

Fig. 17 is a flowchart illustrating an example of a flow of schedule management processing performed by a main routine of schedule management device 10 in Fig. 4. Hereinafter, the step is simply referred to as S.

As illustrated in Fig. 17, schedule management device 10 receives the production order from host system 11 in S110, and advances the processing to S120. Schedule management device 10 calculates work man-hours required for processing the production order in S120, and advances the processing to S130. In S130, schedule management device 10 optimizes the allocation of the resources (for example, the worker, the AMR, and the facility), and advances the processing to S140. In S140, schedule management device 10 creates the work schedule of each of the plurality of work subjects 30, and advances the processing to S150.

In S150, schedule management device 10 determines whether a trigger event is generated. When the trigger event is generated (YES in S150), schedule management device 10 returns the processing to S130. When the trigger event is not generated (NO in S150), schedule management device 10 advances the processing to S160.

In S160, schedule management device 10 determines whether the current period (for example, 1 minute) elapses from the previous period (whether a certain period elapses). When the certain period elapses (YES in S160), schedule management device 10 returns the processing to S130. When the certain period does not elapse (NO in S160), schedule management device 10 advances the processing to S170.

In S170, schedule management device 10 determines whether the work schedule of each of the plurality of work subjects 30 is finished. When the work schedule of each work subject is not finished (NO in S170), schedule management device 10 returns the processing to S150. When the work schedule of each work subject is finished (YES in S170), schedule management device 10 finishes the schedule management processing.

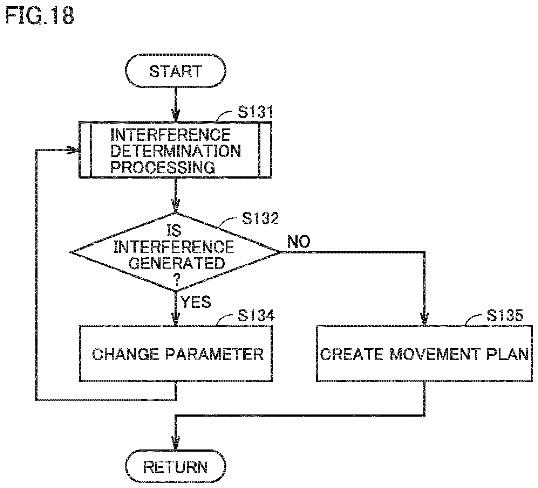

Fig. 18 is a flowchart illustrating an example of a flow of resource allocation optimization processing (S130) in Fig. 17. As illustrated in Fig. 18, schedule management device 10 determines interference between the plurality of work subjects 30 in S131, and advances the processing to S132. In S132, schedule management device 10 determines whether the interference is generated between the plurality of work subjects 30. When the interference is generated between the plurality of work subjects 30 (YES in S132), schedule management device 10 changes the parameter of the optimization processing in S134, and returns the processing to the main routine. In S134, for example, when A* is used as a path design algorithm, the parameter related to the environment map is changed such that the position where the interference is predicted is treated as the obstacle on the environment map. When the interference is not generated between the plurality of work subjects 30 (NO in S132), schedule management device 10 creates a movement plan of the plurality of work subjects 30 in S135, and returns the processing to the main routine. For example, the movement plan includes a movement path of each of the plurality of work subjects 30 and time required for moving along the movement path.

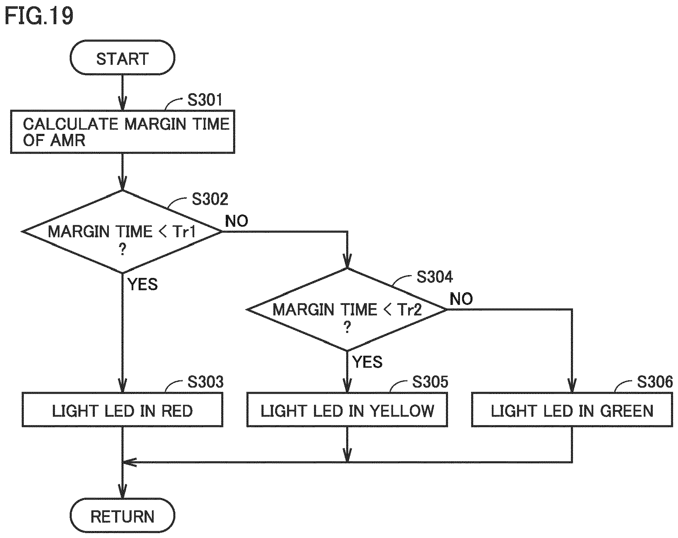

Fig. 19 is a flowchart illustrating an example of a flow of lighting processing of AMR 30A performed in the interference determination processing of Fig. 18. As illustrated in Fig. 19, schedule management device 10 calculates the margin time of AMR 30A in S301, and advances the processing to S302. In S302, schedule management device 10 determines whether the margin time of AMR 30A is shorter than reference time Tr1. When the margin time of AMR 30A is shorter than reference time Tr1 (YES in S302), schedule management device 10 lights LED 305 of AMR 30A in red and returns the processing to the main routine in S303. When the margin time of AMR 30A is greater than or equal to reference time Tr1 (NO in S302), schedule management device 10 advances the processing to S304.

In S304, schedule management device 10 determines whether the margin time of AMR 30A is shorter than reference time Tr2 (> Tr1). When the margin time of AMR 30A is shorter than reference time Tr2 (YES in S304), schedule management device 10 turns on LED 305 of AMR 30A in yellow and returns the processing to the main routine in S305. When the margin time of AMR 30A is greater than or equal to reference time Tr2 (NO in S304), schedule management device 10 turns on LED 305 of AMR 30A in green and returns the processing to the main routine in S306.

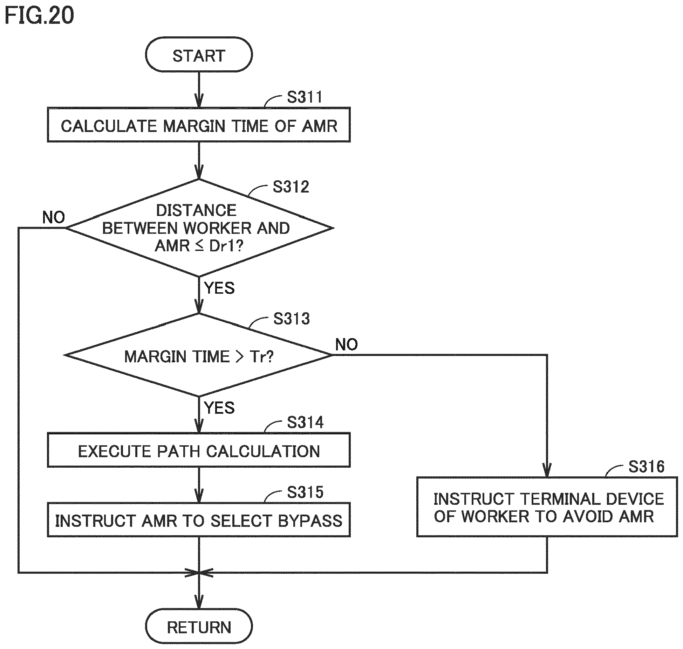

Fig. 20 is a flowchart illustrating an example of a flow of the interference determination processing between AMR 30A and worker 30B performed in the interference determination processing of Fig. 18. As illustrated in Fig. 20, schedule management device 10 calculates the margin time of AMR 30A in S311, and advances the processing to S312.

In S312, schedule management device 10 determines whether the interference condition that the distance between worker 30B and AMR 30A is less than or equal to reference distance Dr1 is satisfied. When the distance between worker 30B and AMR 30A is longer than reference distance Dr1 (NO in S312), schedule management device 10 returns the processing to the main routine. When the distance between worker 30B and AMR 30A is less than or equal to reference distance Dr1 (YES in S312), schedule management device 10 advances the processing to S313.

In S313, schedule management device 10 determines whether the margin time of AMR 30A is longer than a reference time Tr (specific reference time). When the margin time of AMR 30A is less than or equal to reference time Tr (NO in S313), schedule management device 10 instructs the terminal device of worker 30B to avoid AMR 30A in S316, and returns the processing to the main routine. When the margin time of AMR 30A is longer than reference time Tr (YES in S313), schedule management device 10 calculates the path (bypass) of AMR 30A in order to avoid worker 30B, and advances the processing to S315. In S315, schedule management device 10 instructs AMR 30A to select a bypass and returns the processing to the main routine.

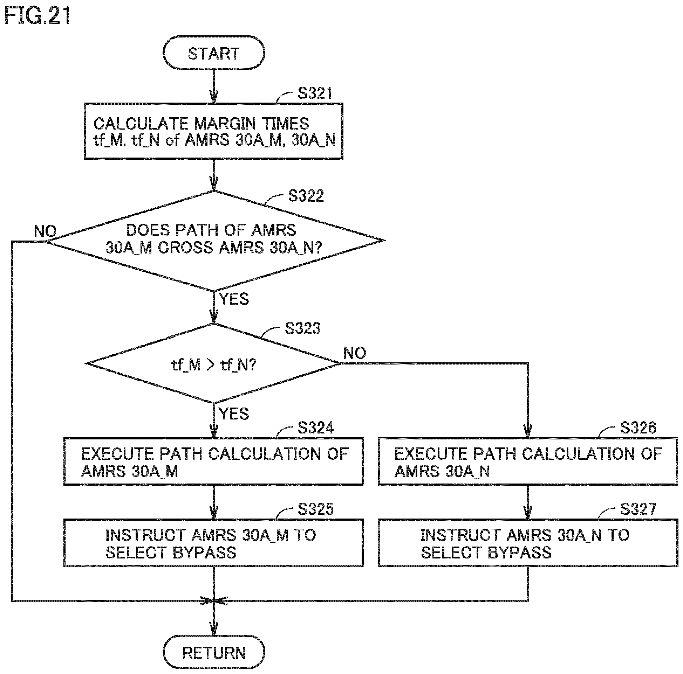

Fig. 21 is a flowchart illustrating an example of a flow of the interference determination processing between two AMRs 30A performed in the interference determination process of Fig. 18. In Fig. 21, two AMRs 30A are represented as AMRs 30A_M, 30A_N. As illustrated in Fig. 21, in S321, schedule management device 10 calculates time margin times tf_M, tf_N of AMRs 30A_M, 30A_N, and advances the processing to S322.

In S322, schedule management device 10 determines whether the interference condition that the path of AMR 30A_M and the path of AMR 30A_N cross each other is satisfied. When the path of AMR 30A_M and the path of AMR 30A_N do not cross each other (NO in S322), schedule management device 10 returns the processing to the main routine. When the path of AMR 30A_M and the path of AMR 30A_N crosses each other (YES in S322), schedule management device 10 determines whether margin time tf_M of AMR 30A_M is longer than margin time tf_N of AMR 30A_N in S323.

When margin time tf_M is longer than margin time tf_N (YES in S323), schedule management device 10 calculates the path (bypass) of AMR 30A_M in order to avoid AMR 30A_N in S324, and advances the processing to S325. In S325, schedule management device 10 instructs AMR 30 A_M to select the bypass, and returns the processing to the main routine.

When margin time tf_M is less than or equal to margin time tf_N (NO in S323), schedule management device 10 calculates the path (bypass) of AMR 30A_N in order to avoid AMR 30A_M in S326, and advances the processing to S327. In S327, schedule management device 10 instructs AMR 30A_N to select the bypass, and returns the processing to the main routine.

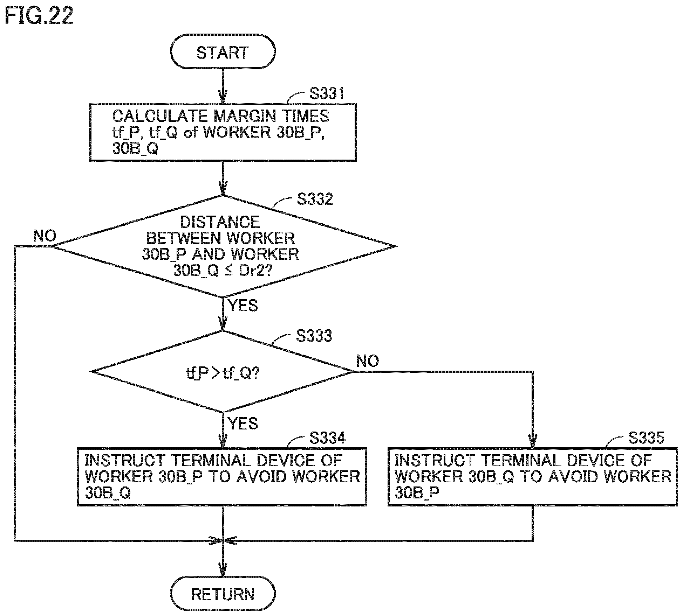

Fig. 22 is a flowchart illustrating an example of a flow of the interference determination processing between two workers 30B performed in the interference determination processing of Fig. 18. In Fig. 22, two workers 30B are represented as workers 30B_P, 30B_Q. As illustrated in Fig. 22, in S331, schedule management device 10 calculates margin times tf_P, tf_Q of workers 30B_P, 30B_Q, and advances the processing to S332.

In S332, schedule management device 10 determines whether the interference condition that the distance between worker 30B_P and worker 30B_Q is less than or equal to reference distance Dr2 is satisfied. When the distance between worker 30B_P and worker 30B_Q is longer than reference distance Dr2 (NO in S332), schedule management device 10 returns the processing to the main routine. When the distance between worker 30B_P and worker 30B_Q is less than or equal to reference distance Dr2 (YES in S332), schedule management device 10 determines whether margin time tf_P of worker 30B_P is longer than margin time tf_Q of worker 30B_Q in S333.

When margin time tf_P is longer than margin time tf_Q (YES in S333), schedule management device 10 instructs terminal device 60 of worker 30B_P to avoid worker 30B_Q in S334, and returns the processing to the main routine. When margin time tf_P is less than or equal to margin time tf_Q (NO in S333), schedule management device 10 instructs terminal device 60 of worker 30B_Q to avoid worker 30B_P in S335, and returns the processing to the main routine.

In the interference determination processing between AMR 30A and worker 30B in Fig. 20, the case where which one of AMR 30A and worker 30B is instructed to perform the avoidance behavior is determined based on the comparison between the margin time of AMR 30A and reference time Tr. Reference time Tr in Fig. 20 may be the margin time of worker 30B. That is, which one of AMR 30A and worker 30B is instructed to perform the avoidance behavior may be determined based on the comparison between the margin time of AMR 30A and the margin time of worker 30B.

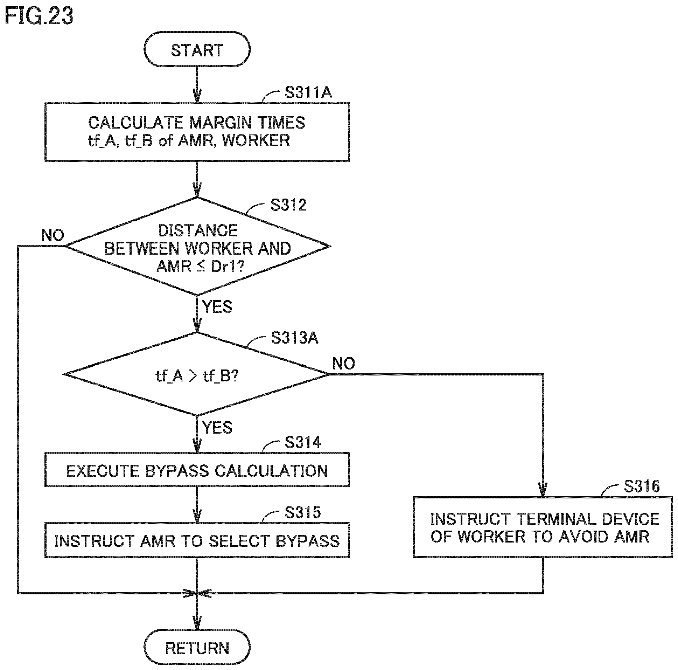

Fig. 23 is a flowchart illustrating another example of the flow of the interference determination processing between AMR 30A and worker 30B performed in the interference determination process of Fig. 18. The flowchart in Fig. 23 is a flowchart in which S311, S313 in Fig. 20 is replaced with S311A, S313A, respectively.

As illustrated in Fig. 23, in S311A, schedule management device 10 calculates margin time tf_A, margin time tf_B of AMR 30A and worker 30B, respectively, and advances the processing to S312.

Schedule management device 10 executes S312 similarly to Fig. 20, and determines whether margin time tf_A of AMR 30A is longer than margin time tf_B of worker 30B in S313A when the affirmative determination is made in S312. When margin time tf_A is less than or equal to margin time tf_B (NO in S313A), schedule management device 10 executes S316, and returns the processing to the main routine similarly to Fig. 20. When margin time tf_A is longer than margin time tf_B (YES in S313A), schedule management device 10 executes S314 and S315 similarly to Fig. 20, and returns the processing to the main routine.

As described above, according to the work management system, the method, and the program of the embodiment, the decrease in productivity can be prevented while the interference between the plurality of work subjects is avoided in the workplace where the work is performed based on the previously-optimized work schedule.

### <Appendix>

The above embodiments include the following technical ideas.

[Configuration 1] A work management system (1) comprising:
a movement monitoring unit (20) configured to acquire movement information related to movement of each of a plurality of work subjects (30) performing a work in a workplace (WP); and
a schedule management unit (10) configured to manage a work schedule of each of the plurality of work subjects (30) based on the movement information,
wherein the plurality of work subjects (30) include a first work subject (30X) and a second work subject (30Y) that move in the workplace (WP), and
the schedule management unit (10) is configured to:
   calculate a first margin time (tfl) from an end time of a first work (W12) to a start time of a second work (W13), the first work (W12) being allocated to a time period including a current time (tc) in a first work schedule (Sc1) of the first work subject (30X), the second work (W13) being scheduled next to the first work (W12) in the first work schedule (Sc1);
   determine whether movement information about the first work subject (30X) and movement information about the second work subject (30Y) satisfy an interference condition;
   instruct the first work subject (30X) to take action of avoiding the second work subject (30Y) when the interference condition is satisfied and the first margin time (tfl) is longer than a specific reference time (Tr); and
   instruct the second work subject (30Y) to take action of avoiding the first work subject (30X) when the interference condition is satisfied and the first margin time (tfl) is shorter than the specific reference time (Tr).

[Configuration 2] The work management system (1) described in configuration 1, wherein
the schedule management unit (10) is configured to calculate a second margin time (tf2) from a start time (t2) of a third work (W22) to a start time (t4) of a fourth work (W23), the third work (W22) being allocated to a time period including the current time (tc) in a second work schedule (Sc2) of the second work subject (30Y), the fourth work (W23) being scheduled next to the third work (W22) in the second work schedule (Sc2), and
the specific reference time is the second margin time (tf2).

[Configuration 3] The work management system (1) described in configuration 2, wherein
the first work subject is a first moving mechanism (30A_1),
the second work subject is a second moving mechanism (30A_2),
the movement information includes a first path (Rt1) and a second path (Rt2), the first path (Rt1) being a path from a current position of the first moving mechanism (30A_1) to a destination of the first work (W12), the second path (Rt2) being a path from a current position of the second moving mechanism (30A_2) to a destination of the third work (W22) in the second work schedule (Sc2), and
the interference condition includes a condition that the first path (Rt1) crosses the second path (Rt2).

[Configuration 4] The work management system (1) described in configuration 3, wherein
each of the first moving mechanism (30A_1) and the second moving mechanism (30A_2) includes a light emitter (305), and
the schedule management unit (10) is configured to:
   light the light emitter (305) in a first color when the first margin time (tfl) is shorter than a first reference time (Tr1);
   light the light emitter (305) in a second color different from the first color when the first margin time (tfl) is longer than the first reference time (Tr1) and shorter than a second reference time (Tr2); and
   light the light emitter (305) in a third color different from each of the first color and the second color when the first margin time (tfl) is longer than the second reference time (Tr2).

[Configuration 5] The work management system (1) described in configuration 1 or 2, further comprising a terminal device (60_1) carried by the worker (30B_1),
wherein at least one of the first work subject (30X) and the second work subject (30Y) is a worker (30B_1),
the movement information includes position information about the terminal device (60_1), and
the interference condition includes a condition that a distance between the first work subject (30X) and the second work subject (30Y) is shorter than a reference distance (Dr1, Dr2).

[Configuration 6] A method for managing a work schedule of a work subject (30) based on movement information related to movement of each of a plurality of work subjects performing a work in a workplace (WP),
the plurality of work subjects (30) including a first work subject (30X) and a second work subject (30Y) that move in the workplace (WP),
the method comprising:
   calculating a first margin time (tfl) from an end time of a first work (W12) to a start time of a second work (W13), the first work (W12) being allocated to a time period including a current time (tc) in a first work schedule (Sc1) of the first work subject (30X), the second work (W13) being scheduled next to the first work (W12) in the first work schedule (Sc1);
   determining whether movement information about the first work subject (30X) and movement information about the second work subject (30Y) satisfy an interference condition;
   instructing the first work subject (30X) to take action of avoiding the second work subject (30Y) when the interference condition is satisfied and the first margin time (tfl) is longer than a specific reference time (Tr); and
   instructing the second work subject (30Y) to take action of avoiding the first work subject (30 X) when the interference condition is satisfied and the first margin time (tfl) is shorter than the specific reference time (Tr).

[Configuration 7] A program managing a work schedule of a work subject (30) based on movement information related to movement of each of a plurality of work subjects performing a work in a workplace (WP),
the plurality of work subjects (30) including a first work subject (30X) and a second work subject (30Y) that move in the workplace (WP),
wherein the program, when executed by a processor, causes the processor to:
   calculate a first margin time (tfl) from an end time of a first work (W12) to a start time of a second work (W13), the first work (W12) being allocated to a time period including a current time (tc) in a first work schedule (Sc1) of the first work subject (30X), the second work (W13) being scheduled next to the first work (W12) in the first work schedule (Sc1);
   determine whether movement information about the first work subject (30X) and movement information about the second work subject (30Y) satisfy an interference condition;
   instruct the first work subject (30X) to take action of avoiding the second work subject (30Y) when the interference condition is satisfied and the first margin time (tfl) is longer than a specific reference time (Tr); and
   instruct the second work subject (30Y) to take action of avoiding the first work subject (30X) when the interference condition is satisfied and the first margin time (tf1) is shorter than the specific reference time (Tr).

Although the embodiment of the present invention has been described, it should be considered that the disclosed embodiment is an example in all respects and not restrictive. The scope of the present invention is indicated by the claims, and it is intended that all modifications within the meaning and scope of the claims are included in the present invention.

## Claims

1. A work management system (1) comprising:
a movement monitoring unit (20) configured to acquire movement information related to movement of each of a plurality of work subjects (30) performing a work in a workplace (WP); and
a schedule management unit (10) configured to manage a work schedule of each of the plurality of work subjects (30) based on the movement information,
wherein the plurality of work subjects (30) include a first work subject (30X) and a second work subject (30Y) that move in the workplace (WP), and
the schedule management unit (10) is configured to:
calculate a first margin time (tfl) from an end time of a first work (W12) to a start time of a second work (W13), the first work (W12) being allocated to a time period including a current time (tc) in a first work schedule (Sc1) of the first work subject (30X), the second work (W13) being scheduled next to the first work (W12) in the first work schedule (Sc1);
determine whether movement information about the first work subject (30X) and movement information about the second work subject (30Y) satisfy an interference condition;
instruct the first work subject (30X) to take action of avoiding the second work subject (30Y) when the interference condition is satisfied and the first margin time (tfl) is longer than a specific reference time (Tr); and
instruct the second work subject (30Y) to take action of avoiding the first work subject (30X) when the interference condition is satisfied and the first margin time (tfl) is shorter than the specific reference time (Tr).

2. The work management system (1) according to claim 1, wherein
the schedule management unit (10) is configured to calculate a second margin time (tf2) from a start time (t2) of a third work (W22) to a start time (t4) of a fourth work (W23), the third work (W22) being allocated to a time period including the current time (tc) in a second work schedule (Sc2) of the second work subject (30Y), the fourth work (W23) being scheduled next to the third work (W22) in the second work schedule (Sc2), and
the specific reference time is the second margin time (tf2).

3. The work management system (1) according to claim 2, wherein
the first work subject is a first moving mechanism (30A_1),
the second work subject is a second moving mechanism (30A_2),
the movement information includes a first path (Rt1) and a second path (Rt2), the first path (Rt1) being a path from a current position of the first moving mechanism (30A_1) to a destination of the first work (W12), the second path (Rt2) being a path from a current position of the second moving mechanism (30A_2) to a destination of the third work (W22) in the second work schedule (Sc2), and
the interference condition includes a condition that the first path (Rt1) crosses the second path (Rt2).

4. The work management system (1) according to claim 3, wherein
each of the first moving mechanism (30A_1) and the second moving mechanism (30A_2) includes a light emitter (305), and
the schedule management unit (10) is configured to:
light the light emitter (305) in a first color when the first margin time (tfl) is shorter than a first reference time (Tr1);
light the light emitter (305) in a second color different from the first color when the first margin time (tfl) is longer than the first reference time (Tr1) and shorter than a second reference time (Tr2); and
light the light emitter (305) in a third color different from each of the first color and the second color when the first margin time (tfl) is longer than the second reference time (Tr2).

5. The work management system (1) according to claim 1 or 2, further comprising a terminal device (60_1) carried by a worker (30B_1),
wherein at least one of the first work subject (30X) and the second work subject (30Y) is the worker (30B_1),
the movement information includes position information about the terminal device (60_1), and
the interference condition includes a condition that a distance between the first work subject (30X) and the second work subject (30Y) is shorter than a reference distance (Dr1, Dr2).

6. A method for managing a work schedule of a work subject (30) based on movement information related to movement of each of a plurality of work subjects performing a work in a workplace (WP),
the plurality of work subjects (30) including a first work subject (30X) and a second work subject (30Y) that move in the workplace (WP),
the method comprising:
calculating a first margin time (tfl) from an end time of a first work (W12) to a start time of a second work (W13), the first work (W12) being allocated to a time period including a current time (tc) in a first work schedule (Sc1) of the first work subject (30X), the second work (W13) being scheduled next to the first work (W12) in the first work schedule (Sc1);
determining whether movement information about the first work subject (30X) and movement information about the second work subject (30Y) satisfy an interference condition;
instructing the first work subject (30X) to take action of avoiding the second work subject (30Y) when the interference condition is satisfied and the first margin time (tfl) is longer than a specific reference time (Tr); and
instructing the second work subject (30Y) to take action of avoiding the first work subject (30X) when the interference condition is satisfied and the first margin time (tfl) is shorter than the specific reference time (Tr).

7. A program that manages a work schedule of a work subject (30) based on movement information related to movement of each of a plurality of work subjects performing a work in a workplace (WP),
the plurality of work subjects (30) including a first work subject (30X) and a second work subject (30Y) that move in the workplace (WP),
wherein the program, when executed by a processor, causes the processor to:
calculate a first margin time (tfl) from an end time of a first work (W12) to a start time of a second work (W13), the first work (W12) being allocated to a time period including a current time (tc) in a first work schedule (Sc1) of the first work subject (30X), the second work (W13) being scheduled next to the first work (W12) in the first work schedule (Sc1);
determine whether movement information about the first work subject (30X) and movement information about the second work subject (30Y) satisfy an interference condition;
instruct the first work subject (30X) to take action of avoiding the second work subject (30Y) when the interference condition is satisfied and the first margin time (tfl) is longer than a specific reference time (Tr); and
instruct the second work subject (30Y) to take action of avoiding the first work subject (30X) when the interference condition is satisfied and the first margin time (tfl) is shorter than the specific reference time (Tr).
